(19) Europäisches Patentamt
European Patent Office
Office européen des brevets

(11) Veröffentlichungsnummer: **0 441 148 B1**

# (12) EUROPÄISCHE PATENTSCHRIFT

(45) Veröffentlichungstag der Patentschrift: **21.12.94**

(51) Int. Cl.[5]: **C08F 8/30**, C08F 8/48

(21) Anmeldenummer: **91100625.2**

(22) Anmeldetag: **19.01.91**

## (54) Verfahren zum Imidieren eines Methacrylester-Polymerisats.

(30) Priorität: **01.02.90 DE 4002904**

(43) Veröffentlichungstag der Anmeldung:
**14.08.91 Patentblatt 91/33**

(45) Bekanntmachung des Hinweises auf die Patenterteilung:
**21.12.94 Patentblatt 94/51**

(84) Benannte Vertragsstaaten:
**AT BE CH DE DK ES FR GB IT LI NL SE**

(56) Entgegenhaltungen:
**EP-A- 0 216 505**
**EP-A- 0 331 052**
**DD-A- 212 258**
**DE-A- 3 430 802**
**FR-A- 2 180 763**
**US-A- 4 246 374**

**CHEMICAL ABSTRACTS, vol. 108, no. 2, 11. Januar 1988, Columbus, Ohio, US; abstract no. 6679Y, SASAKI ET AL.: 'TRANSPARENT AND HEAT-RESISTANT METHACRYLIMIDE GROUP-CONTAINING POLYMERS' Seite 17 ;**

(73) Patentinhaber: **RÖHM GMBH**
**Kirschenallee**
**D-64293 Darmstadt (DE)**

(72) Erfinder: **Höss, Werner**
**Kirschberg 18**
**W-6103 Griesheim (DE)**
Erfinder: **Vetter, Heinz, Dr.**
**Taunusstrasse 92**
**W-6101 Rossdorf 1 (DE)**
Erfinder: **Brehm, Manfred, Dr.**
**Hollerbach 16**
**W-8750 Aschaffenburg (DE)**
Erfinder: **Schröder, Günter, Dr.**
**Leipziger Strasse 7**
**W-6105 Ober-Ramstadt (DE)**
Erfinder: **Reiner, Roland, Dr.**
**Am Oberfeld 19**
**W-6100 Darmstadt (DE)**

**EP 0 441 148 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Imidieren eines Polymerisats von Alkylestern der Methacrylsäure durch Umsetzung mit einem stickstoffhaltigen Imidierungsmittel.

## Stand der Technik

Die Umsetzung von Polymerisaten von Alkylestern der Acryl- und/oder Methacrylsäure mit primären Aminen oder mit Derivaten davon, die unter den Umsetzungsbedingungen primäre Amine bilden oder zu den gleichen Umsetzungsprodukten wie diese führen, ist seit langem bekannt. Die Umsetzung der primären Amine $R-NH_2$ führt zu Polymerisaten mit cyclischen Einheiten der Struktur

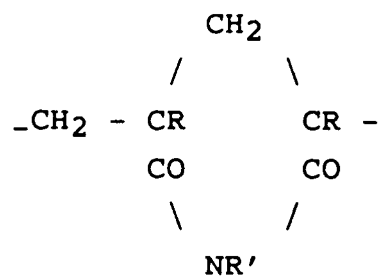

worin R ein Wasserstoffatom ist, wenn sich die dargestellte Struktur von Acrylestereinheiten ableitet, oder ein Methylrest ist, wenn sie sich von Methacrylestereinheiten ableitet. Die formelmäßig dargestellte cyclische Einheit wird als Acryl- bzw. Methacrylimid-Gruppe bezeichnet. Deshalb werden die stickstoffhaltigen Verbindungen, die mit Einheiten von Alkylestern der Acryl- und/oder Methacrylsäure zu Acryl- und/oder Methacrylimid-Gruppen reagieren, hier zusammenfassend als Imidierungsmittel bezeichnet.

Die teilweise oder vollständige Imidierung von Polymerisaten von Alkylestern der Methacrylsäure durch Umsetzung mit einem stickstoffhaltigen Imidierungsmittel ist z.B. aus der US-A 2 146 209 bekannt. Das Polymerisat wird in An- oder Abwesenheit eines Lösungsmittels mit dem Imidierungsmittel gegebenenfalls unter Druck auf Temperaturen von 140 bis 250 °C erhitzt. Nach DE-B 1 113 308 (OZ 558) wird ein höherer Grad der Imidierung erreicht, wenn man die Umsetzung in Gegenwart von Wasser bei 130 bis 160 °C durchführt.

Imidierte Polymerisate mit verbesserten Eigenschaften, wie besserer Löslichkeit und höherer thermischer Beständigkeit, erhält man gemäß DE-B 26 52 118, wenn man die Imidierung in einem Extruder bei 200 bis 450 °C unter im wesentlichen wasserfreien Bedingungen durchführt. Diese Bedingung gilt als erfüllt, wenn der Wassergehalt des Reaktionsgemisches unter 2 Gew.-% liegt.

Bei allen erwähnten Verfahren wird die Imidierung in der Weise durchgeführt, daß das Polymerisat mit einer bestimmten Menge des Imidierungsmittels vermischt und - meist unter Druck - erhitzt wird, bis der Endgehalt an Imidgruppen erreicht ist. In der Regel wird das Imidierungsmittel nicht quantitativ zu Imidgruppen umgesetzt. Eine vollständige Imidierung ist nur mit einem stöchiometrischen Überschuß des Imidierungsmittels erreichbar. Wird es in genau stöchiometrischer Menge eingesetzt, so erhält man ein Polymerisat, in dem nicht alle ursprünglich enthaltenen Methacrylestereinheiten in Methacrylimid-Einheiten umgewandelt worden sind. Bei Einsatz einer unterstöchiometrischen Menge des Imidierungsmittels bleibt der Anteil der Methacrylimid-Einheiten stets deutlich hinter dem theoretisch errechenbaren Wert zurück.

Eine vollständige Imidierung ist meistens gar nicht erwünscht. Reines Polymethacryl-methylimid hat eine Vicat-(B)-Erweichungstemperatur von 178 °C, während die Vicat-Erweichungstemperatur von Polymethylmethacrylat bei 105 °C liegt. Die Erweichungstemperaturen von teilweise imidiertem Polymethylmethacrylat liegen zwischen diesen Werten. Oft werden Polymerisate mit Gehalten von 30 bis 85 Grundmol-% an Methacrylimid-Einheiten angestrebt, weil sie sich durch besonders vorteilhafte Verarbeitungs- und Anwendungseigenschaften auszeichnen.

Während es bei Einsatz überschüssigen Imidierungsmittels möglich ist, ein vollständig imidiertes Polymerisat zu erhalten, hat es sich nicht als möglich erwiesen, Polymethylmethacrylat durch eine begrenzte Menge an Imidierungsmittel in ein nur aus Methylmethacrylat- und Methacrylimid-Einheiten aufgebautes Polymerisat umzuwandeln. Man findet stets auch Einheiten der Methacrylsäure und des Methacrylsäureanhydrids. Eigentümlicherweise ist das auch dann der Fall, wenn die Umsetzung in vollständiger Abwesenheit von Wasser durchgeführt wird. Es hat den Anschein, daß neben der Umsetzung von zwei benachbarten Methylmethacrylat-Einheiten mit einem Molekül Methylamin zu einer Methacrylimid-Einheit und zwei Molekülen Methanol eine Nebenreaktion der gleichen Komponenten stattfindet, bei der durch eine N-Alkylierung ein Alkylrest der Estergruppe auf das Stickstoffatom des Amins übertragen wird, wobei Carboxylgruppen oder - durch Wasserabspaltung zwischen zwei Carboxylgruppen - Anhydridgruppen entstehen; Lit. G. Schröder, Makromolekulare Chemie, Band 96, S. 227-244 (1966). Di- und Trimethylamin sind als Nebenprodukte nachweisbar.

Die Carboxyl- und Anhydridgruppen haben selbst in geringen Anteilen von z.B. 2 bis 10 Grundmol-% unerwünschte Auswirkungen auf die Eigenschaften des teilimidierten Polymerisats. Seine Witterungs- und Alkalibeständigkeit sowie die Mischbarkeit mit anderen thermoplastischen Polymerisaten sind beeinträchtigt. Um diesen Nachteil zu beseitigen, werden die teilimidierten Polymerisate gemäß EP-A 216 505 nachträglich mit einem Alkylierungsmittel, beispielsweise mit einem Orthoameisensäureester, umgesetzt. Die erforderliche Menge des Alkylierungsmittels richtet sich nach dem Gehalt an Carboxyl- und Anhydridgruppen. Diese Nachbehandlung erhöht die Verfahrenskosten.

## Aufgabe und Lösung

Der Erfindung liegt die Aufgabe zugrunde, die Bildung von Carboxyl- und Anhydridgruppen beim Imidieren eines Polymerisats von Alkylestern der Methacrylsäure durch Umsetzung mit einem stickstoffhaltigen Imidierungsmittel zu unterdrücken und dadurch den nachfolgenden Einsatz von Alkylierungsmitteln ganz oder teilweise entbehrlich zu machen.

Überraschenderweise gelingt das auf einfache Weise dadurch, daß bei der Umsetzung ein Teil des Imidierungsmittels erst zugesetzt wird, nachdem das zuvor zugesetzte Imidierungsmittel wenigstens teilweise oder ganz umgesetzt ist. Es ist davon auszugehen, daß bei der Umsetzung des ersten Anteils des Imidierungsmittels zwar Carboxyl- bzw. Anhydridgruppen entstehen, jedoch werden sie anscheinend bei der weiteren Zugabe eines weiteren Anteils des Imidierungsmittels bevorzugt umgesetzt, wobei im ersten Schritt Carbonamidgruppen und im zweiten Schritt durch deren Kondensation mit benachbarten Carbonamid-, Ester- oder Carboxylgruppen cyclische Methacrylimidgruppen entstehen dürften. Daneben kann es auch zur Neubildung von Carboxyl- und Anhydridgruppen kommen, jedoch ist ihr Anteil geringer als wenn die Gesamtmenge des Imidierungsmittels auf einmal zur Reaktion gebracht worden wäre. Wird dagegen von vornherein ein deutlicher Überschuß des Imidierungsmittels eingesetzt, so kann der Prozeß der Umsetzung intermediär gebildteter Carboxyl- und Anhydridgruppen bis zur vollständigen Imidierung des ganzen Polymerisats fortschreiten. Deshalb hat das Verfahren der Erfindung vor allem dann Bedeutung, wenn die Umsetzung mit dem Imidierungsmittel abgebrochen wird, bevor das Polymerisat vollständig imidiert ist.

Der oben erläuterte Mechanismus ist zwar nicht erwiesen, jedoch stehen die Beobachtungen damit gut im Einklang. Es erweist sich als vorteilhaft, wenn die zuerst zugesetzte Menge des Imidierungsmittels möglichst vollständig, jedenfalls zu mehr als 50 %, umgesetzt worden ist, bevor eine weitere Menge zugesetzt wird. Vorteilhaft ist auch, den ersten Anteil des Imidierungsmittels größer als die nachfolgenden Anteile zu bemessen. Das molare Verhältnis von Imidierungsmittel und noch nicht umgesetzten Estereinheiten wird vorzugsweise bei jedem Zusatz an Imidierungsmittel etwa gleichgroß gehalten. Die Bildung von Carboxyl- und Anhydridgruppen kann auf diesem Wege in der Regel nicht vollständig, aber doch sehr weitgehend unterdrückt werden. Die am Schluß noch verbleibenden Carboxyl- bzw. Anhydridgruppen wirken sich entweder nur noch geringfügig auf die Produkteigenschaften aus oder sie lassen sich mit einem entsprechend niedrigeren Einsatz an Alkylierungsmitteln beseitigen.

Nach der Stöchiometrie sollte bei der Umsetzung der Carboxyl- oder Anhydridgruppen mit dem Imidierungsmittel, insbesondere mit dem freien Amin, Wasser entstehen. Dieses könnte durch Hydrolyse von Estergruppen die Neubildung von Carboxylgruppen fördern. Dieser unerwünschte Effekt kann dadurch vermieden werden, daß vor dem Zusatz eines weiteren Teils des Imidierungsmittels die bis dahin gebildeten flüchtigen Reaktionsprodukte aus dem Reaktionsgemisch entfernt werden. Dies kann in einer Entspannungszone geschehen, in der neben dem Wasser vor allem das durch Aminolyse der Estergruppen gebildete Alkanol sowie nicht umgesetzte Reste des Amins, ferner Di- und Trialkylamine gasförmig entweichen. Zur weiteren Umsetzung wird das Polymerisat zusammen mit einem weiteren Anteil des Imidierungsmittels erneut den für die Umsetzung erforderlichen Temperatur- und Druckbedingungen ausgesetzt.

Die Verminderung des Carboxyl- und Anhydridgehaltes durch die erfindungsgemäße Verfahrensweise wird durch die folgenden Vergleichswerte veranschaulicht. Durch Zusatz von 1,2 Mol Methylamin/Grundmol PMMA bei 245 °C und einem Reaktionsdruck von 200 bar wurde in einem Schritt ein Polymerisat mit etwa 70 Gew.-% Imidgruppen, 4 Gew.-% Säuregruppen, 3 Gew.-% Anhydridgruppen, Rest Estergruppen erhalten.

Setzt man dagegen PMMA in vier Reaktionsstufen unter gleichen Bedingungen mit jeweils der halben grundmolaren Menge (d.h. 0,5 Mol Amin/Äquivalent an ursprunglich vorhandenen Estergruppen) an Methylamin um, so verändern sich die Gehalte an Methacrylimid-, Methacrylsäure- und Methacrylsäureanhydrid-Einheiten schrittweise wie folgt:

| | Imid-gruppen Gew.-% | Säure-gruppen Gew.-% | Anhydrid-gruppen Gew.-% |
|---|---|---|---|
| 1. Stufe | 15 | 1,4 | 6,9 |
| 2. Stufe | 40 | 1,6 | 5,1 |
| 3. Stufe | 80 | 1,3 | 4,1 |
| 4. Stufe | 84 | 1,5 | 2,8 |

Die in der zweiten bis vierten Stufe erhaltenen teilimidierten Polymerisate zeichnen sich durch einen deutlich verminderten Carboxyl- und Anhydridgehalt im Vergleich zu einstufig erzeugten Polymerisaten vom gleichen Imidgehalt aus.

Ausführung der Imidierung

Das Verfahren der Erfindung kann kontinuierlich oder diskontinuierlich durchgeführt werden. Im letztgenannten Fall wird ein Teil des Imidierungsmittels zu Beginn der Umsetzung und der verbleibende Teil allmählich oder in einem oder mehreren Anteilen nach teilweiser Umsetzung der Anfangsmenge zugesetzt. Beispielsweise kann das Imidierungsmittel mit einer Druckpumpe gleichmäßig oder in periodischen Anteilen in den auf Reaktionstemperatur erhitzen Reaktor eingepreßt werden. Gegebenenfalls wird jeweils vor dem Zusatz eines weiteren Teils des Imidierungsmittels die im Reaktor angesammelte Gasphase teilweise oder vollständig entspannt, wodurch die bis dahin gebildeten flüchtigen Reaktionsprodukte aus dem Reaktionsgemisch entfernt werden.

Bei kontinuierlicher Arbeitsweise wird die Imidierung zweckmäßig in einem Rohrreaktor durchgeführt und das Polymerisat und das Imidierungsmittel werden kontinuierlich in den Rohrreaktor eingeleitet. An einer ersten Einlaßöffnung wird der erste Anteil des Imidierungsmittels mit dem schmelzflüssigen Polymerisat vermischt. Weitere Teile des Imidierungsmittels werden an einer oder mehreren Stellen in den Rohrreaktor eingeführt, an der bzw. an denen das davor eingeleitete Imidierungsmittel teilweise umgesetzt ist. Als Rohrreaktor wird vorzugsweise ein Ein- oder Mehrschneckenextruder verwendet. Auch hier können Druck- und Entgasungszonen einander abwechseln, um aus dem im Extruder allmählich weiterbewegten Reaktionsgemisch jeweils vor dem Zusatz eines weiteren Teils des Imidierungsmittels die bis dahin gebildeten flüchtigen Reaktionsprodukte zu entfernen.

Bei beiden Verfahrensweisen wird niemals eine bestimmte Mengeneinheit des Ausgangspolymeren auf einmal mit der Gesamtmenge des insgesamt damit umzusetzenden Imidierungsmittels versetzt, sondern diese Menge wird in mehrere zeitlich oder räumlich getrennte Zugabemengen aufgeteilt. Dies gilt unabhängig von der Größe der Gesamtmenge im Verhältnis zur Polymerisatmenge. Beispielsweise kann 1 Grundmol PMMA auf einmal mit 0,5 Mol Imidierungsmittel umgesetzt werden, wenn nachfolgend weitere Mengen des Imidierungsmittels zugesetzt werden. Beträgt dagegen die Gesamtmenge nur 0,5 Mol, so muß der zuerst eingesetzte Anteil unter 0,5 Mol liegen. Der erste Anteil soll in der Regel nicht mehr als 80 Mol-% der Gesamtmenge, vorzugsweise 20 bis 60 Mol-%, ausmachen. Der Rest verteilt sich, sofern er nicht allmählich und gleichförmig zugeführt wird, vorzugsweise auf eine bis fünf Zugabemengen. Jede Teilmenge sollte mit Vorteil höchstens 75 % der davor zugesetzten Menge ausmachen. Gleichbleibende Zusatzmengen in allen Stufen sind möglich, von Stufe zu Stufe steigende Zusatzmengen ungünstig.

Vorzugsweise wird die Umsetzung mit dem Imidierungsmittel abgebrochen, bevor das Polymerisat vollständig imidiert ist. Zu diesem Zweck kann das Imidierungsmittel in einer Gesamtmenge von 0,2 bis 1,0 Mol pro Grundmol der Estereinheiten eingesetzt werden. (Die Bezeichnung "Grundmol" bezieht sich auf die den polymerisierten Estereinheiten zugrundeliegende Menge des Estermonomeren.) Man erhält dann Polymerisate, die zu etwa 20 bis 80 Grundmol-% aus cyclischen Methacrylimid-Einheiten aufgebaut sind.

Die Ausgangsstoffe und Verfahrensbedingungen,

die bei dem Verfahren der Erfindung zur Anwendung kommen, sind die gleichen wie bei bekannten Imidierungsverfahren. Die nachfolgende Charakterisierung faßt die gebräuchlichen Ausgangsstoffe und Verfahrensbedingungen zusammen, ohne daß damit eine zwingende Begrenzung beabsichtigt ist.

Das Polymerisat von Alkylestern der Methacrylsäure besteht zu mindestens 24 Gew.-%, im allgemeinen zu mehr als 50 Gew.-%, vorzugsweise zu mehr als 80, besonders bevorzugt zu 95 bis 100 Gew.-% aus Einheiten von Alkylestern der Methacrylsäure mit 1 bis 4 Kohlenstoffatomen im Alkylrest. Bevorzugt ist Methylmethacrylat. Bevorzugte Polymerisate sind zu wenigstens 80 Gew.-% aus Methylmethacrylat aufgebaut. Als Comonomere kommen alle damit copolymerisierbaren Monomeren, insbesondere Alkylester der Acrylsäure mit 1 bis 4 Kohlenstoffatomen im Alkylrest, Acryl- und/oder Methacrylsäure, Acryl- und/oder Methacrylnitril, Acryl- und/oder Methacrylamid oder Styrol in Betracht. Bevorzugt sind thermoplastisch verarbeitbare Polymerisate dieser Art mit einer reduzierten Viskosität im Bereich von 20 bis 92 und vorzugsweise von 50 bis 80 ml/g. Sie werden bevorzugt in Form eines Pulvers oder Granulats mit einer mittleren Teilchengröße von 0,03 bis 3 mm eingesetzt.

Als Imidierungsmittel wird im Regelfall Ammoniak oder vorzugsweise ein primäres aliphatisches Amin, vorzugsweise ein Alkylamin mit 1 bis 12 Kohlenstoffatomen im Alkylrest, insbesondere Methylamin eingesetzt. Auch cycloaliphatische oder araliphatische Amine, wie Cyclohexylamin oder Benzylamin, sind geeignet. Stattdessen können Derivate des Ammoniaks oder des primären Amins eingesetzt werden, die sich unter den Bedingungen des Imidierungsverfahrens wie diese verhalten, d.h. eine Imidierung bewirken. Dazu gehören die Salze des Ammoniaks oder der primären Amine mit organischen oder anorganischen Säuren, wie Salzsäure, Kohlensäure, Ameisensäure, Essigsäure, ferner Harnstoffe, Thioharnstoffe, Carbaminate, Guanidine, Formamide, Acetamide, Amide anderer aliphatischer oder aromatischer Carbonsäuren, Sulfonamide. Gegebenenfalls können auch Gemische mehrerer Imidierungsmittel eingesetzt werden.

**Das Imidierungsverfahren**

läuft am besten bei Temperaturen oberhalb der Schmelztemperatur bzw. mindestens 20 °C oberhalb der Vicat-B-Erweichungstemperatur des Ausgangspolymeren ab. Noch besser wird eine Umsetzungstemperatur gewählt, die mindestens 20 °C oberhalb der Erweichungstemperatur des entstehenden imidierten Polymerisats liegt. Da die Vicat-Erweichungstemperatur des imidierten Polymeren in der Regel die wesentliche Zielgröße des Verfahrens ist und der zu erreichende Imidierungsgrad danach festgelegt wird, ist es ebenso leicht möglich, die erforderliche Mindest-Temperatur zu bestimmen. Bevorzugt ist der Temperaturbereich von 140 bis 400, insbesondere von 200 bis 300 °C. Zu hohe Umsetzungstemperaturen führen manchmal zu einer Verminderung der reduzierten Viskosität infolge teilweisen Kettenbruchs des Polymeren. Um das Polymerisat nicht mehr als nötig thermisch zu belasten, kann die Umsetzungstemperatur, ausgehend von einer Temperatur dicht über der Schmelztemperatur des Ausgangspolymeren, von Stufe zu Stufe gesteigert werden und erst in der letzten Stufe die Erweichungstemperatur des imidierten Endproduktes um wenigstens 20 °C überschreiten. Innerhalb jeder Umsetzungsstufe wird vorzugsweise bei dem sich von selbst einstellenden Druck, der bei 50 bis 500 bar liegen kann, gearbeitet, während zwischen diesen Stufen - wie oben erläutert - ganz oder teilweise entspannt werden kann. Dabei kann die Temperatur des Reaktionsgemisches sinken und muß danach wieder auf den erforderlichen Wert erhöht werden. Wird zusätzliches Imidierungsmittel unter Umsetzungsbedingungen zugeführt, so muß dafür natürlich ein entsprechend hoher Druck angewendet werden.

Die Umsetzungsdauer richtet sich nach der Reaktionsgeschwindigkeit unter den angewandten Bedingungen. Sie kann nach jeder Zugabe eines Anteils des Imidierungsmittels deutlich kürzer als die Reaktionszeit sein, die zu einer vollständigen Imidierung benötigt würde, soll aber jeweils ausreichen, um einen teilweisen, vorzugsweise mehr als 50 %-igen Umsatz des jeweils zugegebenen Imidierungsmittels zu erreichen. Im allgemeinen sind dafür 10 sec bis 30 min, vorzugsweise 1 bis 7 min, pro Zugabestufe, bzw. eine gleichlange Verweilzeit bei kontinuierlicher Verfahrensweise ausreichend.

Die Umsetzung kann gewünschtenfalls in einer, mehreren oder allen Stufen in Anwesenheit von Lösungs- bzw. Verdünnungsmitteln durchgeführt werden, wie beispielsweise aus US 2 146 209, DE 1 077 872, DE 1 088 231 oder EP 234 726 bekannt. Geeignete Lösungs- bzw. Verdünnungsmittel sind vor allem solche, die bei Raumtemperatur flüssig und bei erhöhter Temperatur, gegebenenfalls bei Unterdruck flüchtig sind und sich von dem imidierten Polymerisat leicht abtrennen lassen. Sie können entweder für das Ausgangspolymerisat oder für das imidierte Polymerisat oder für beide Lösungsmittel sein, gegebenenfalls nur unter den Umsetzungsbedingungen, jedoch ist dies nicht grundsätzlich notwendig. Zu den verwendbaren Lösungs- bzw. Verdünnungsmitteln zählen Mineralöle, Benzinkohlenwasserstoffe, Aromaten, Alkanole, Ether, Ketone, Ester, Halogen-Kohlenwasserstoffe, sowie auch Wasser.

Nach der letzten Umsetzungsstufe wird entspannt und das imidierte Polymerisat abgekühlt. Dabei können das gegebenenfalls mitverwendete Lösungs- bzw. Verdünnungsmittel zusammen mit überschüssigem Imidierungsmittel und abgespaltenem Alkanol von dem imidierten Polymerisat abgetrennt werden. Diese Verfahrensstufe gestaltet sich besonders vorteilhaft, wenn das Verfahren zumindest in der letzten Stufe in einem Rohrreaktor, insbesondere in einem Extruder durchgeführt wird. Die vom Polymerisat abzutrennenden Stoffe können in flüssiger oder in Dampfform vor dem Ende des Rohrreaktors an einer oder mehreren Stellen abgenommen werden, wo das Polymerisat noch im Schmelzezustand vorliegt. Dabei kann der erste Anteil dieser Stoffe unter dem vollen Reaktionsdruck und die letzten Reste aus einer Entspannungszone im Unterdruck abgenommen werden. Dafür können bekannte ein- oder mehrstufige Entgasungsextruder eingesetzt werden. Gegebenfalls kann auch das ganze Reaktionsgemisch aus dem Rohrreaktor ausgetragen, entspannt, gekühlt und zerkleinert und erst danach von den Nebenbestandteilen getrennt werden. Zu diesem Zweck kann das erkaltete und zerkleinerte Polymerisat mit einem geeigneten Lösungsmittel oder mit Wasser gewaschen werden.

Das erhaltene imidierte Produkt kann in bekannter Weise, z.B. thermoplastisch verarbeitet werden. Dank seines verminderten Gehalts an Carbonsäure- und Anhydridgruppen zeichnet es sich durch eine verbesserte Mischbarkeit und Verträglichkeit mit anderen Polymerisaten, wie z.B. Polyamiden oder Styrol-Acrylnitril-Mischpolymerisaten, aus. Aus dem gleichen Grund ist die Wasseraufnahme bei Feuchtigkeitseinwirkung um 1 bis 2 Gew.-% geringer. Dadurch ist auch die Gefahr der Rißbildung infolge einer durch Wasseraufnahme bewirkten Quellspannung vermindert.

## BEISPIELE

1. Diskontinuierliche Arbeitsweise

In einen Reaktionsextruder wird zu einer PMMA-Schmelze (reduzierte Viskosität 76 ml/g) bei 200 bar und 250 °C die halbe stöchiometrische Menge an Methylamin, bezogen auf die vorhandenen Estereinheiten, eindosiert. Nach einer mittleren Verweilzeit von 5 - 7 Minuten wird die Schmelze ausgetragen und entspannt, wobei nicht umgesetztes Methylamin und das bei der Umsetzung abgespaltene Methanol verdampfen. Die Schmelze wird gekühlt und nach dem Erstarren zerkleinert. Nach Umsatz von 50 kg PMMA wird das Verfahren abgebrochen.

In einer zweiten Umsetzungsstufe wird das erhaltene teilimidierte Material in der gleichen Weise erneut umgesetzt, wobei die Methylaminzufuhr entsprechend dem verminderten Estergruppengehalt verringert wird. Nach insgesamt fünf Umsetzungsstufen unter gleichen Bedingungen wird ein Polymerisat mit 80 Gew.-% Methacrylimid-Einheiten, 1,3 Gew.-% Methacrylsäure-Einheiten und 2,0 Gew.-% Methacrylsäureanhydrid-Einheiten erhalten.

2. Kontinuierliche Arbeitsweise

In einen Reaktionsextruder wird zu einer PMMA-Schmelze (reduzierte Viskosität 76 ml/g) bei 200 bar und 250 °C die 0,3-fach stöchiometrische Menge an Methylamin, bezogen auf die vorhandenen Estereinheiten, eindosiert. An drei weiteren Zugabestellen, die zwischen der ersten Zugabestelle und dem Schneckenende in etwa gleichen Abständen verteilt angeordnet sind, werden jeweils weitere 0,3 Mol Methylamin, bezogen auf ursprünglich enthaltene Estergruppen des PMMA, zudosiert. Nach einer Verweilzeit von insgesamt etwa 7 min wird die Schmelze ausgetragen und entspannt, wobei nicht umgesetztes Methylamin und das bei der Umsetzung abgespaltene Methanol verdampfen. Die Schmelze wird gekühlt und nach dem Erstarren zerkleinert. Das erhaltene Polymerisat enthält 82 Gew.-% Methacrylimid-Einheiten, 1,7 Gew.-% Methacrylsäure-Einheiten und 2,0 Gew.-% Methacrylsäureanhydrid-Einheiten.

Zum Vergleich wird die gleiche Gesamtmenge von 1,2 Mol Methylamin pro Grundmol an Estergruppen unter gleichen Druck- und Temperaturbedingungen an einer Stelle in den Extruder eindosiert. Das bei der einstufigen Verfahrensweise erhaltene Polymerisat enthält 79 Gew.-% Methacrylimid-Einheiten, 4,7 Gew.-% Methacrylsäure-Einheiten und 1,9 Gew.-% Methacrylsäureanhydrid-Einheiten. Der höhere Gehalt an Carboxyl- und Anhydridgruppen wirkt sich nachteilig auf die Mischbarkeit mit anderen Thermoplasten aus und erhöht die Wasseraufnahme bei Feuchtigkeitseinfluß.

## Patentansprüche

**1.** Verfahren zum Imidieren eines Polymerisats von Alkylestern der Methacrylsäure durch Umsetzung mit einem stickstoffhaltigen Imidierungsmittel, dadurch gekennzeichnet, daß ein Teil des Imidierungsmittels

erst zugesetzt wird, nachdem das zuvor zugesetzte Imidierungsmittel wenigstens teilweise oder ganz umgesetzt ist.

2. Verfahren nach Anspruch 1, dadurch gekennzeichnet, daß die Umsetzung mit dem Imidierungsmittel abgebrochen wird, bevor das Polymerisat vollständig imidiert ist.

3. Verfahren nach Anspruch 1 oder 2, dadurch gekennzeichnet, daß die Imidierung diskontinuierlich durchgeführt wird und ein Teil des Imidierungsmittels zu Beginn der Umsetzung und der verbleibende Teil allmählich oder in einem oder mehreren Anteilen nach teilweiser Umsetzung der Anfangsmenge zugesetzt wird.

4. Verfahren nach Anspruch 1 oder 2, wobei die Imidierung kontinuierlich in einem Rohrreaktor durchgeführt wird und das Polymerisat und das Imidierungsmittel kontinuierlich in den Rohrreaktor eingeleitet werden, dadurch gekennzeichnet, daß ein Teil des Imidierungsmittel an einer oder mehreren Stellen in den Rohrreaktor eingeführt wird, an der bzw. an denen das davor eingeleitete Imidierungsmittel wenigstens teilweise oder ganz umgesetzt ist.

5. Verfahren nach Anspruch 4, dadurch gekennzeichnet, daß als Rohrreaktor ein Ein- oder Mehrschneckenextruder verwendet wird.

6. Verfahren nach einem oder mehreren der Ansprüche 1 bis 5, dadurch gekennzeichnet, daß ein Teil des Imidierungsmittels nach Umsetzung von mehr als 50 % des zuvor zugegebenen Imidierungsmittels zugesetzt wird.

7. Verfahren nach einem oder mehreren der Ansprüche 1 bis 6, dadurch gekennzeichnet, daß das Imidierungsmittel in einer Gesamtmenge von 0,2 bis 0,8 Mol pro Grundmol der Estereinheiten eingesetzt wird.

8. Verfahren nach einem oder mehreren der Ansprüche 1 bis 7, dadurch gekennzeichnet, daß als Imidierungsmittel Ammoniak oder ein primäres aliphatisches Amin, vorzugsweise mit 1 bis 12 Kohlenstoffatomen im Alkylrest, ein davon abgeleiteter Harnstoff, Thioharnstoff oder ein davon abgeleitetes Salz oder Carbaminat eingesetzt wird.

9. Verfahren nach einem oder mehreren der Ansprüche 1 bis 8, dadurch gekennzeichnet, daß vor dem Zusatz eines weiteren Teils des Imidierungsmittels die bis dahin gebildeten flüchtigen Reaktionsprodukte aus dem Reaktionsgemisch entfernt werden.

10. Verfahren nach Anspruch 8, dadurch gekennzeichnet, daß die flüchtigen Reaktionsprodukte in Dampfform aus dem Reaktionsgemisch entfernt werden.

11. Verfahren nach einem oder mehreren der Ansprüche 1 bis 10, dadurch gekennzeichnet, daß die Imidierung beendet wird, wenn der Anteil an cyclischen Methacrylalkylimideinheiten 20 bis 80 Grundmol-% beträgt.

12. Verfahren nach den Ansprüchen 4 und 9, dadurch gekennzeichnet, daß ein Teil des aus dem Rohrreaktor austretenden Produktes an oder vor einer Einspeisungsstelle für das Imidierungsmittel in den Rohrreaktor zurückgeführt wird.

## Claims

1. A process for imidifying a polymer of alkyl esters of methacrylic acid by reaction with a nitrogen-containing imidifying agent, characterised in that a part of the imidifying agent is only added after the previously added imidifying agent is reacted at least partly or completely.

2. A process according to claim 1, characterised in that the reaction with the imidifying agent is discontinued before the polymer is completely imidified.

3. A process according to either claim 1 or 2, characterised in that the imidification is carried out discontinuously and a part of the imidifying agent is added at the beginning of the reaction and the remaining part is added gradually or in one or several parts after the partial reaction of the initial amount.

4. A process according to claim 1 or 2, in which the imidification is carried out continuously in a tubular reactor and the polymer and the imidifying agent are continuously introduced into the tubular reactor, characterised in that a part of the imidifying agent is introduced into the tubular reactor at one or more points, at which point or points the previously introduced imidifying agent is reacted at least partly or completely.

5. A process according to claim 4, characterised in that a single or multiple screw extruder is used as tubular reactor.

6. A process according to one or more of claims 1 to 5, characterised in that a part of the imidifying agent is added after the reaction of more than 50% of the previously added imidifying agent.

7. A process according to one or more of claims 1 to 6, characterised in that the imidifying agent is used in a total amount of 0.2 to 0.8 Mol per basic Mol of ester units.

8. A process according to one or more of claims 1 to 7, characterised in that ammonia or a primary aliphatic amine, preferably having 1 to 12 carbon atoms in the alkyl group, a urea or thiourea derived therefrom, or a salt or carbonate derived therefrom, are used as the imidifying agent.

9. A process according to one or more of claims 1 to 8, characterised in that before adding a further part of the imidifying agent, the volatile reaction products, formed so far, are removed from the reaction mixture.

10. A process according to claim 8, characterised in that the volatile reaction products are removed from the volatile reaction mixture in the form of a vapour.

11. A process according to one or more of claims 1 to 10, characterised in that the imidification is terminated when the amount of cyclic methacrylic alkyl imide units is 20 to 80 basic Mol %.

12. A process according to claims 4 and 9, characterised in that a part of the product issuing from the tubular reactor is returned into the tubular reactor at or before a feed point for the imidifying agent.

**Revendications**

1. Procédé d'imidation d'un polymère d'esters alkyliques de l'acide méthacrylique, par réaction avec un agent d'imidation azoté, caractérisé en ce qu'une partie de l'agent d'imidation est d'abord ajoutée, après quoi l'agent d'imidation préalablement ajouté est mis à réagir, au moins partiellement ou complètement.

2. Procédé selon la revendication 1, caractérisé en se que la reaction avec l'agent d'imidation est interrompue avant que le polymère ne soit complètement imidé.

3. Procédé selon la revendication 1 ou 2, caractérise en ce que l'imidation est conduite de façon discontinue et une partie de l'agent d'imidation est ajoutée au début de la reaction et la partie restante est ajoutée progressivement ou en une ou plusieurs portions après la réaction partielle de la quantité initiale.

4. Procédé selon la revendication 1 ou 2, dans lequel l'imidation est conduite de façon continue dans un réacteur tubulaire et le polymère et l'agent d'imidation sont envoyés en continu dans le réacteur tubulaire, caractérisé en ce qu'une partie de l'agent d'imidation est introduite dans le réacteur tubulaire en un ou plusieurs points, au niveau duquel ou desquels l'agent d'imidation introduit préalablement est mis à réagir, au moins partiellement ou complètement.

**5.** Procédé selon la revendication 4, caractérisé en ce qu'une extrudeuse à une ou plusieurs vis est utilisée comme réacteur tubulaire.

**6.** Procédé selon l'une quelconque des revendications 1 à 5, caractérisé en ce qu'une partie de l'agent d'imidation est ajoutée après la réaction de plus de 50% de l'agent d'imidation ajouté préalablement.

**7.** Procédé selon l'une quelconque des revendications 1 à 6, caractérisé en ce que l'agent d'imidation est mis en réaction en une quantité totale de 0,2 à 0,8 mole par mole fondamentale des motifs ester.

**8.** Procédé selon l'une quelconque des revendications 1 à 7, caractérise en ce qu'on utilise, comme agent d'imidation, de l'ammoniac ou une amine aliphatique primaire, de préférence à 1-12 atomes de carbone dans le reste alkyle, une urée ou une thio-urée dérivée de ceux-ci, ou un sel ou un carbaminate dérivé de ceux-ci.

**9.** Procédé selon l'une quelconque des revendications 1 à 8, caractérisé en ce qu'avant l'addition d'une autre partie de l'agent d'imidation, les produits de réaction volatils formés jusque là sont éliminés du mélange réactionnel.

**10.** Procédé selon la revendication 9, caractérisé en ce que les produits de réaction volatils sont éliminés du mélange réactionnel sous forme de vapeurs.

**11.** Procédé selon l'une quelconque des revendications 1 a 10, caractérisé en ce qu'il est mis fin à l'imidation lorsque la proportion de motifs méthacrylalkylimide cycliques s'élève a 20-80% en moles fondamentales.

**12.** Procédé selon les revendications 4 et 9, caractérisé en ce qu'une partie du produit qui sort du réacteur tubulaire est renvoyée dans le réacteur tubulaire au niveau ou en amont d'un point d'alimentation en agent d'imidation.